# EUROPEAN PATENT SPECIFICATION

(11) **EP 3 364 083 B1**
(45) Date of publication and mention of the grant of the patent: **23.12.2020**
(21) Application number: 18165391.6
(22) Date of filing: 23.06.2015
(51) Int. Cl.: F16K 31/124, F16K 31/42

(54) **SOFT THROTTLING VALVE**
WEICHES DROSSELVENTIL
SOUPAPE D'ÉTRANGLEMENT SOUPLE

(30) Priority: 30.04.2015 IN 1215DE2015
(43) Date of publication of application: 22.08.2018
(62) Divisional of application: 15173249.2
(73) Proprietor: Danfoss A/S, 6430 Nordborg (DK)
(72) Inventor: MATZEN, Detlef, 6430 Nordborg (DK); ARUL MIKE PRAKASH, John, 6430 Nordborg (DK); VENKATESH, Raghavendra, 6430 Nordborg (DK); VIJAYAN, Aravind, 6430 Nordborg (DK)
(74) Representative: Keil & Schaafhausen Patentanwälte PartGmbB

(56) References cited:
- DE-A1- 3 305 093
- FR-A1- 2 250 059
- US-A- 3 185 344
- US-A- 3 415 269
- US-A1- 2008 251 146

## Description

The present invention relates to a soft throttling valve having the features of the preamble of claim 1.

Such a valve is known, for example, from US 3 185 344 A. This document discloses a soft throttling valve comprising an inlet, an outlet, and a main valve having a main valve seat which cooperates with a throttling section of a main valve element between the inlet and the outlet. The soft throttling valve is arranged for throttling the main valve in such a way that a pressure shock is reduced and comprises a follower arrangement having a follower element and an orifice and being arranged to throttle a pilot fluid flow for setting a degree of opening of the main valve in order to allow a soft throttling of the main valve, the throttling of the pilot fluid flow depending on a degree of opening of the main valve.

US 2006/0197041 A1 relates to a dual position pilot operated valve assembly. It is disclosed that said assembly comprises an adjustment mechanism controlling the degree of opening/closing of the valve assembly. The utilization of the dual position pilot operated valve assembly, by a reason of its opening and/or closing only part way, prevents or at least mitigates liquid hammer or vapor propelled liquid at the termination of a hot gas defrost step in a refrigeration cycle operation.

WO 2011/063375 A1 shows an adjustable fail-safe suction valve stop. This valve provides for hot gas defrost in refrigeration applications. Said valve includes a second piston reciprocable within a bore in an adapter body, the second piston having a portion adapted to extend into a bore in the valve body for contacting a first piston. The portion of the second piston may be axially adjustable to optimize the partial opening of the valve when the second piston is pushed fully downward towards the first piston.

US 5, 070, 707 discloses a shockless system and hot gas valve for refrigeration and air conditioning. The shockless defrost valve operated by solenoids is automatically self-controlled by the downstream pressure of the valve. When a valve opening is called for, a pilot solenoid valve opens a regulatory passage. The resistance of the regulatory passage to the hot gas flow reduces the pressure gradient of the flow and thus eliminates the possibility of a shock wave being propagated. When the downstream pressure due to the outlet pressure control of the evaporator increases to a preset value, a diaphragm driven by the control pressure from downstream moves and opens a passage for the gas from upstream of the valve to drive a power piston downward.

It is a known issue that an exact control of a degree of opening of the main valve in the soft throttling valve can be difficult. Sometimes such a control system for the pilot fluid flow may comprise many elements and thus may become complex and expensive. Thus, the control over the pilot fluid flow for setting the degree of opening of the main valve may be inadequate.

It is an object of the invention to provide a soft throttling valve which allow for a good control of the pilot fluid flow for setting the degree of opening of the main valve situated in the soft throttling valve body.

The object of the invention is solved by soft throttling valve according to claim 1. Using the follower arrangement has the advantage that the pilot fluid flow may be automatically reduced when the degree of opening of the main valve reaches a certain value. Then, due to a reduced pressure increase a further opening of the main valve may be prevented, so that the main valve maintains a partially opened position, thus the degree of opening corresponds to between more than 0 % of a maximum main fluid flow through the main valve and less than 100 % of the maximum main fluid flow through the main valve. This allows to have a stepwise opening of the main valve in a soft opening process wherein in a first step only a partial opening of the main valve occurs, and wherein in a later step a full opening of the main valve occurs. Likewise, such soft throttling may be applied in a soft closing process wherein in a first step a partial closure to the partial opening of the main valve occurs and in a second step a full closure of the main valve occurs.

Thus, by means of the invention good control over the degree of opening of the main valve of the soft throttling valve may be achieved.

According to the disclsure the soft throttling valve may comprise a top cover. Concerning the top cover it is preferred that the follower arrangement comprises a biasing element and a follower element, the biasing element biasing the follower element so as to reduce the pilot fluid flow through the top cover. This allows to bias the follower element towards a position in which for example the pilot fluid flow through the follower arrangement is so much reduced that the further opening of the main valve is effectively prevented. It is preferred that the biasing element biases the follower element in a position in which the pilot fluid flow through the follower arrangement is completely stopped. In some embodiments of the invention though the pilot fluid flow is preferably just reduced in that position, preferably by more than 50 %, more preferably by more than 70 %, more preferably by more than 90 %, and most preferably by more than 95 % compared to a maximum pilot fluid flow through the follower arrangement. Thus, a very limited pilot fluid flow may still be allowed even if the biasing element significantly reduces the pilot fluid flow depending on the degree of opening of the main valve. Then a very slow continuous throttling process of the main valve is possible.

In the top cover it is preferred that the follower arrangement has an orifice and the follower arrangement is arranged to reduce the pilot fluid flow through the orifice. Thus, the orifice is used as a duct for supplying the pilot fluid flow towards the main valve to control the degree of opening of the main valve. When the follower arrangement follows a movement of a main valve element during the opening process or the closing process it may gradually or instantaneously reduce the pilot fluid flow through the orifice. In some embodiments the follower arrangement is arranged to reduce the pilot fluid flow through the orifice instantaneously, for example when the main valve reaches a predetermined degree of opening. By this a sudden stop of the movement of the main valve element during the opening process or the closing process becomes possible. It is preferred that the follower element has a surface which cooperates with the orifice in order to reduce the pilot fluid flow. Preferably, the follower element covers the orifice in a closed position of the follower arrangement in order to reduce or stop the pilot fluid flow through the orifice. For example, this may happen by the surface present at the follower element. It is preferred that the pilot fluid flow passes through the orifice in general in a direction parallel to a movement direction of the follower element. It is preferred that the movement direction of the follower element is parallel to the movement direction of the main valve element of the main valve. Thus, a direct pilot fluid flow from the top cover towards the main valve is possible through the orifice.

In a preferred embodiment of the top cover, the biasing element biases the follower element towards the orifice. This is a preferred way of interaction between the biasing element, the follower element and the orifice. Thus, the orifice may be partially or totally blocked depending only on a force exerted by the biasing element and the movement of the main valve element which corresponds to a change in the degree of opening of the main valve. By that, the effect of the follower arrangement becomes independent from a pilot fluid pressure or other external forces which otherwise may be necessary to reduce or stop the pilot fluid flow at a predetermined degree of opening of the main valve. In other words, the follower arrangement provides a self-controlled shut down or opening of the orifice during the opening process or the closing process, respectively, of the main valve.

In a preferred embodiment of the top cover, the biasing element is a coil spring. It is also preferred that the coil spring surrounds the follower element coaxially. Of course, other types of springs which serve the same purpose may also be used. The advantage of the coil spring may be in that it can allow compact construction of the follower arrangement. It is preferred that the coil spring is seated at a surface of the follower arrangement opposite of a follower element seat which preferably comprises the orifice of the follower arrangement. By this a linear translation of the follower element towards the orifice becomes possible.

In the top cover, it is preferred that the follower element comprises a needle. Thus, the follower arrangement may preferably be a needle follower. Such a construction may be provided at a low price and due to its simple design it can be very failsafe. Furthermore, a length of the needle may be set so that the predetermined degree of opening of the main valve may be reached before the pilot fluid flow is downthrottled during the opening process of the main valve. For example during the first step in the opening process of the main valve, a comparably long length of the needle may result in a larger degree of opening of the main valve while a comparably short length of the needle may result in a smaller degree of opening of the main valve as the blocking of the orifice by the follower element may occur rather late or rather early, respectively. Thus, by exchanging the needle having the shorter length with the needle having the longer length, the throttling behavior of the follower arrangement may easily be adapted in view of the desired use of the soft throttling valve. It is preferred that the needle comprises two needle sections, wherein a first needle section has a larger diameter perpendicular to a longitudinal extension of the needle element than a second section of the needle. This first section of the needle element may be used as a seat for the biasing element. Furthermore, this first section of the needle may be used to provide the surface for interacting with the orifice of the follower arrangement. It is preferred that in a biased position of the follower element the needle extends outwardly of the top cover so that it can interact with the main valve element of the soft throttling valve easily.

In a preferred embodiment of the soft throttling valve according to the invention it is preferred that the soft throttling valve comprises the biasing element and the follower element, the follower element being biased by the force exerted by the biasing element in order to follow the movement of the main valve element. The advantages and embodiments described in view of the top cover also pertain to the soft throttling valve. Thus, the biasing element may bias the follower element to a position in which the pilot fluid flow to the main valve element may be down throttled when the main valve element reaches a position in which the desired degree of opening of the main valve is established. This position of the follower element may correspond to the closed position of the follower arrangement.

In a preferred embodiment of the soft throttling valve the follower arrangement has the orifice and the follower element is arranged to reduce the pilot fluid flow through the orifice depending on the degree of opening of the main valve during the throttling process so that the main valve can be maintained in the partially open position during the throttling process of the main valve. It is preferred that the main valve is maintained in the partially open position for a predetermined amount of time during the opening process or the closing process of the main valve. By that, the pressure shock may be effectively prevented. For example, at the predetermined degree of opening of the main valve the follower arrangement may partially or completely reduce the pilot fluid flow through the orifice. It is preferred that at the predetermined degree of opening of the main valve the pilot fluid flow for driving the main valve is reduced to 50 % of the initial pilot fluid flow through the follower arrangement. Preferably, the initial pilot fluid flow is a maximum pilot fluid flow. It is more preferred that the pilot fluid flow in such a case is reduced by more than 70 %, preferably by more than 85 %, preferably by more than 95 %. It is most preferred that the pilot fluid flow through the orifice is completely stopped when the main valve reaches the predetermined degree of opening, preferably depending on the length of the follower element.

In a preferred embodiment of the soft throttling valve the biasing element biases the follower element towards the orifice. As explained in view of the top cover this allows for self-controlled throttling of the pilot fluid flow depending only on the force exerted by the biasing element and the degree of opening of the main valve whose main valve element is preferably followed by the follower arrangement. It is preferred that the biasing element biases the follower element towards the orifice so that the first section of the follower element partially or completely blocks the orifice when the pretermined degree of opening of the main valve is reached.

It is preferred, in an embodiment of the soft throttling valve, that the follower element comprises the needle. The advantages discussed in view of the top cover comprising the follower arrangement also apply in this case. Having the needle as the follower element allows for a simple, dependable and flexible solution.

For the soft throttling valve, it is preferred that the soft throttling valve comprises the soft throttling valve body and a top cover. By having the follower arrangement in the top cover the soft throttling valve body may easily be provided with a new top cover comprising the needle of a different length or replacing older types of pilot fluid flow throttling designs. It is preferred that the main valve is situated in the soft throttling valve body. It is furthermore preferred that the top cover comprises controlling valves, preferably solenoid valves, for activating or deactivating the pilot fluid flow through the soft throttling valve. Preferably, there are two solenoid valves for this purpose. It is furthermore preferred that the pilot fluid flow is taken from a main fluid flow before the main fluid passes through the main valve. In other embodiments the pilot fluid flow may also be from a fluid flow different from that to be throttled by the main valve, thus not transferring through the main valve. A preferred fluid is a gas, even more preferred a hot gas, preferably at a temperature above 100° C. This allows for reliable deicing in a refrigeration system.

In a method according to the disclosure it is preferred that the follower arrangement comprises the orifice and the follower element, the follower element reducing the pilot fluid flow through the orifice when the main fluid flow through the main valve reaches a predetermined volume. Latter is the same as reaching the predetermined degree of opening. For example, during the opening process of the main valve, when the main valve reaches the predetermined degree of opening, the pilot fluid flow may be reduced or completely stopped in order to maintain the main valve in the partially opened position. It is preferred that the predetermined degree of opening of the main valve at which the follower arrangement throttles the pilot fluid flow corresponds to less than 10 % of the maximum main fluid flow through the main valve, preferably to less than 20 %, preferably to less than 40 %, preferably to less than 60 %, and most preferably to less than 75 %. On the other hand, it is preferred that the predetermined degree of opening of the main valve at which the follower arrangement throttles the pilot fluid flow is larger than 5 % of the maximum degree of opening of the main valve, preferably more than 15 %, preferably more than 35 %, preferably more than 55 % and preferably more than 65 %. Such values allow for a controlled first step of opening or closing the main valve in order to prevent pressure shock. For example, the predetermined volume corresponds to 14 % of the maximum degree of opening of the main valve. Preferably, in the second step of opening, the main valve is set to 100 % of opening. Preferably the switching between the first step with a limited degree of opening and the second step with a complete opening of the main valve corresponds to a sudden increase of main flow. Thus preferably the pilot fluid flow driving the main valve element can be suddenly increased or decreased to open or close the main valve immediately.

In the method according to the disclosure it is preferred that reducing the pilot fluid flow through the orifice comprises blocking the orifice by the follower element in order to stop the pilot fluid flow through the orifice when the main fluid flow through the main valve reaches the predetermined volume. By that a sudden stop of the movement of the main valve is possible. Blocking in this sense means basically closing the orifice in order to reduce the pilot fluid flow to approximately 0 % of the maximum possible pilot fluid flow through the follower arrangement.

In the following the invention is described in view of exemplary embodiments provided in the attached figures, in which:
- Fig. 1: shows a perspective view of the soft throttling valve and the top cover according to the invention;
- Fig. 2: shows a top view of the embodiment according to the solution depicted in Fig. 1;
- Fig. 3: shows a partial section along a longitudinal axis of the soft throttling valve depicted in Fig. 1;
- Fig. 4: shows a schematic longitudinal section of the soft throttling valve according to the invention;
- Fig. 5: shows a detail of the embodiment depicted in Fig. 4;
- Fig. 6: shows an exemplary time-flow-diagram which may be obtained by using embodiments of the invention; and
- Fig. 7a to 7c: illustrate the method of soft throttling the main valve according to the invention.

Reference numerals are introduced into the detailed description of embodiments following hereafter. They are meant for increasing the readability of the claims and are in no way limiting.

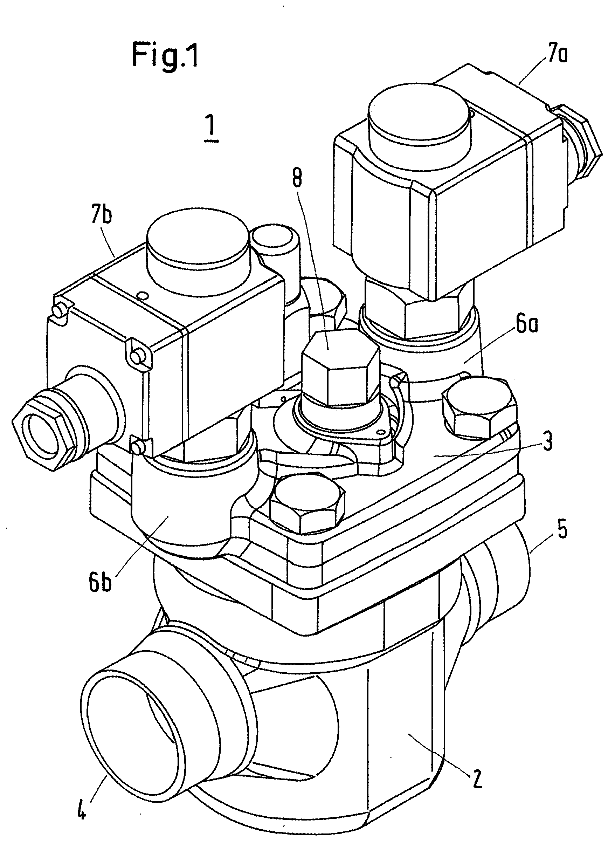

Fig. 1 shows the soft opening valve 1 according to the invention. The soft opening valve 1 comprises the soft opening valve body 2 and the top cover 3. The soft opening valve body 2 comprises the inlet 4 and the outlet 5. The inlet 4 is adapted to receive the main fluid flow. The outlet 5 is adapted to let out the main fluid flow transferred through the soft opening valve body 2. The top cover 3 comprises valve installation seatings 6a, 6b for installation of valves 7a, 7b, in this case solenoid valves. They are used in order to activate or deactivate the pilot fluid flow for the main valve within the soft opening valve body 2 when necessary. Furthermore, the top cover 3 comprises the follower arrangement 8 arranged to throttle the pilot fluid flow, the follower arrangement 8 being arranged to throttle the pilot fluid flow depending on the degree of opening of the main valve, not shown in this figure.

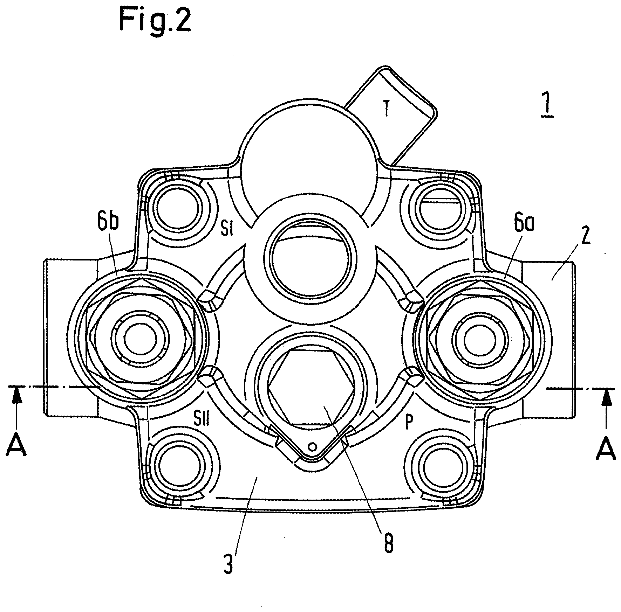

Referring now to Fig. 2 it may be seen that at the top cover 3 the follower arrangement 8 is arranged symmetrically between the valve installation seatings 6a, 6b, which in this case are provided to the right and to the left of the follower arrangement 8 and on top of the inlet 4 and the outlet 5 of the soft opening valve body 2 in the top view as given in Fig. 2. This allows for a compact design.

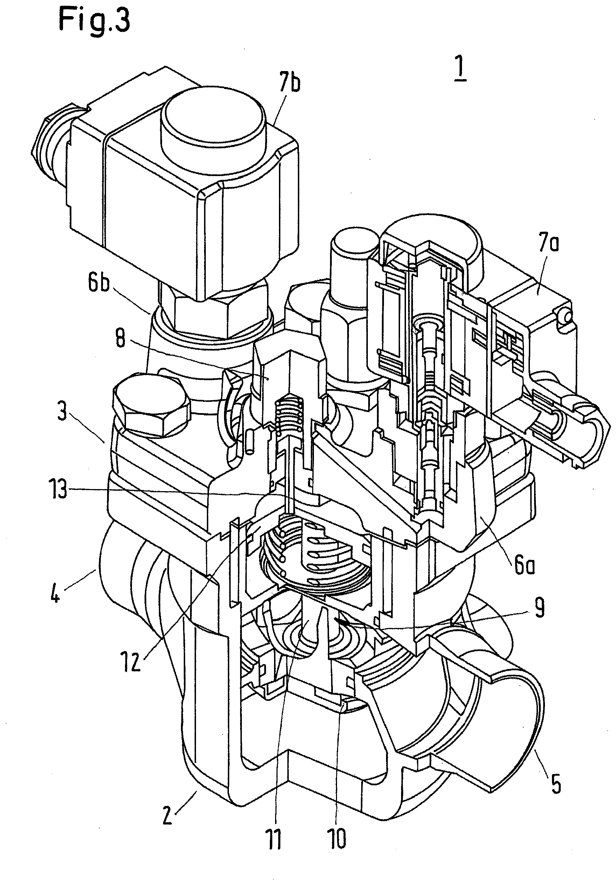

As can be seen in Fig. 3, the main valve comprises the main valve element 9 which has a throttling section 10, a stem section 11 and a top plate section 12, the stem section 11 connecting the throttling section 10 with the top plate section 12. The follower element 13 arranged in the follower arrangement 8 is arranged to follow a translatory movement of the main valve element 9 by being in contact with the top plate section 12 of the main valve element 9. Furthermore, the main valve comprises the main valve seat 14 which cooperates with the throttling section 10 of the main valve element 9 in order to control the main fluid flow through the soft opening valve 2.

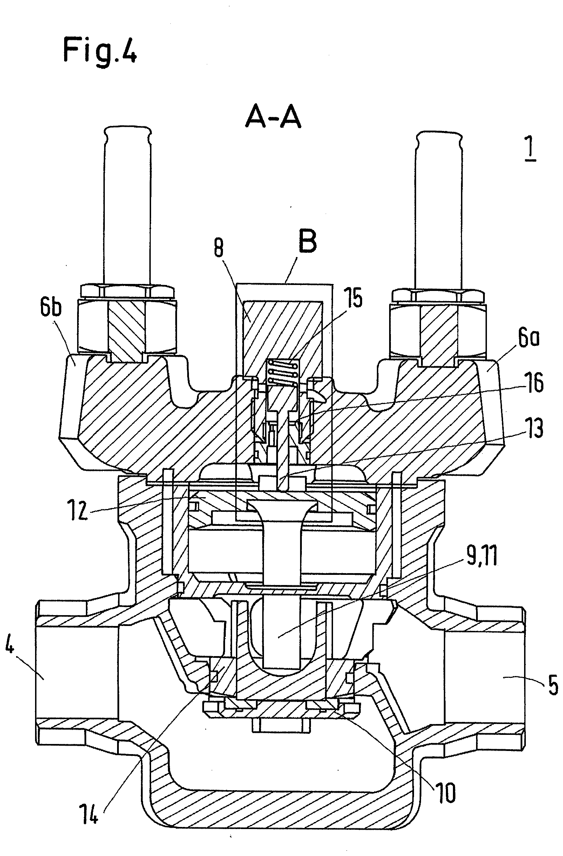

Fig. 4 illustrates more details of the soft opening valve 1 according to the invention. As may be seen the follower arrangement 8 comprises the biasing element 15, in this case the coil spring surrounding the follower element 13 coaxially. The biasing element 15 biases the follower element 13 so as to reduce the pilot fluid flow through the top cover 3. As in this case the follower element 13 comprises the needle, the biasing element 15 is seated on the first section of the follower element 13 in order to exert a force towards the top plate section 12 of the main valve element 9 and towards the follower element seat 16 of the follower arrangement 8. By this, the follower element 13 may follow the movement of the main valve element 9 and throttle the pilot fluid flow depending on the degree of opening of the main valve as explained in detail below.

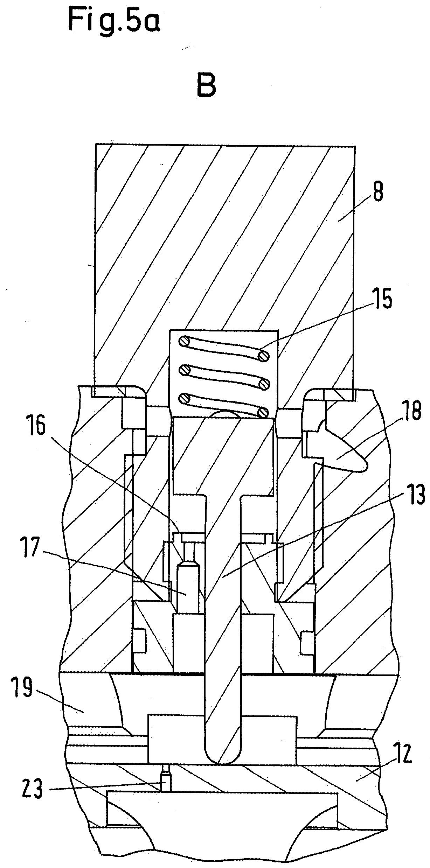

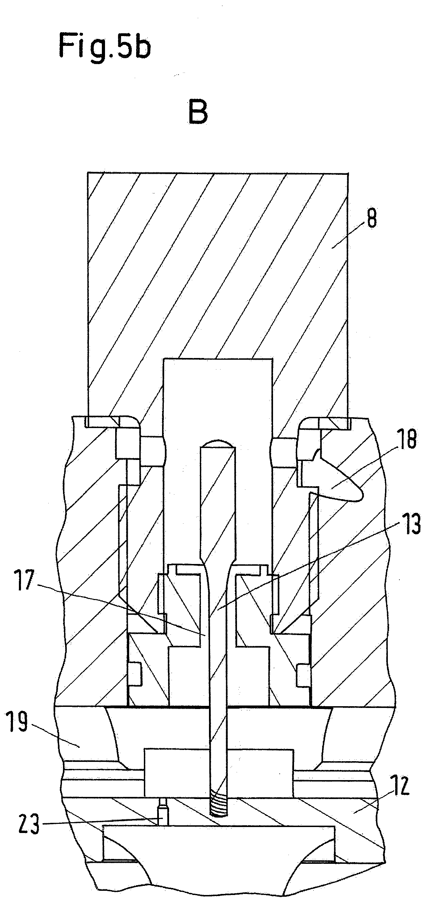

Fig. 5 shows the follower arrangement 8 of the soft opening valve 1 in more detail. The follower arrangement 8 has a housing which houses the follower element 13, the biasing element 15 and the follower element seat 16. Furthermore, the housing comprises the orifice 17 which provides a fluid connection between a fluid conduit 18 for transferring the pilot fluid flow for setting the degree of opening of the main valve and the main valve element 9. The follower element 13 is arranged to reduce the pilot fluid flow through the orifice 16. This is because the biasing element 15 biases the follower element 13 towards the orifice 17. Thus, as the follower element 13 is in contact with the top plate section 12 of the main valve element 9 the follower element 13 is biased by the force exerted by the biasing element 15 in order to follow the movement of the main valve element 9. This allows that the main valve is maintained in the partially open position during the throttling process of the main valve as the surface of the follower element 13, which in this case comprises the needle, at the predetermined degree of opening of the main valve will block the orifice 17 in the follower element seat 16. By that, the pilot fluid flow to the top plate section 12 of the main valve element 9 is interrupted and the movement of the main valve element 9 is stopped due to a stop in pressure increase on the top plate section 12.

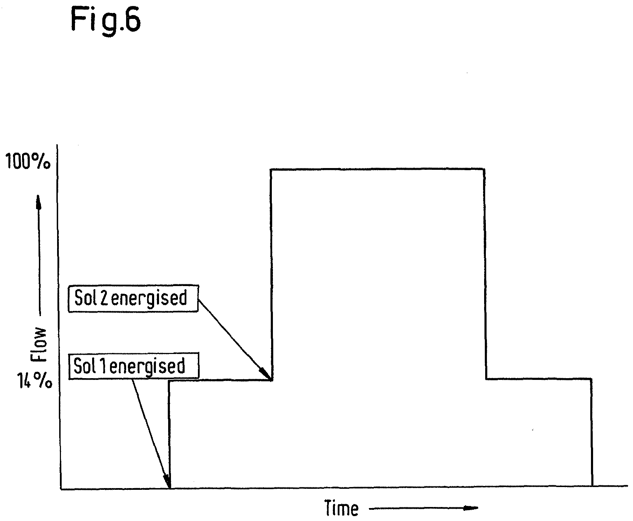

The mechanical design as described before may lead to a time-flow-dependency as shown in Fig. 6. For example, a first solenoid (Sol 1, 7a) may be energized to start the pilot fluid flow for the main valve element 9. By that, the pressure driving the main valve element 9 increases and the main valve element 9 starts to move towards the predetermined degree of opening. The follower element 13 is designed to close the orifice 17 in the follower arrangement 8 when the predetermined degree of opening of the main valve is reached, in this case at 14 % of the maximum possible opening. The main valve is then maintained in the partially opened position as the driving pressure created by the pilot fluid on the main valve remains stable. At a later time, a second solenoid (Sol 2, 7b) is energized which provides another pilot fluid flow to the main valve element 9 circumventing the closed orifice 17 in the follower arrangement 8. Thus, the other pilot fluid flow may be used to further increase the pressure on the top plate section 12 again in order to reach the maximum possible main fluid flow through the main valve despite the orifice 17 being closed. When the main valve shall be closed this can also be done in two steps. In the first step the second solenoid 7b is de-energized. Through a bleeding channel (not shown) the pilot fluid may bleed from a pressure chamber 19 above the top plate section 12. The gradually decreasing pressure will allow the main valve to close. During the closing process, the top plate section 12 will translate the follower element 13 against the biasing force of the biasing element 15 away from the orifice 17 so that the fluid flow may leave the pressure chamber 19 through the orifice 17 until a pressure in the pressure chamber 19 becomes so low that the main valve completely closes so that the main fluid flow through the main valve finally falls to 0 % of the maximum main fluid flow.

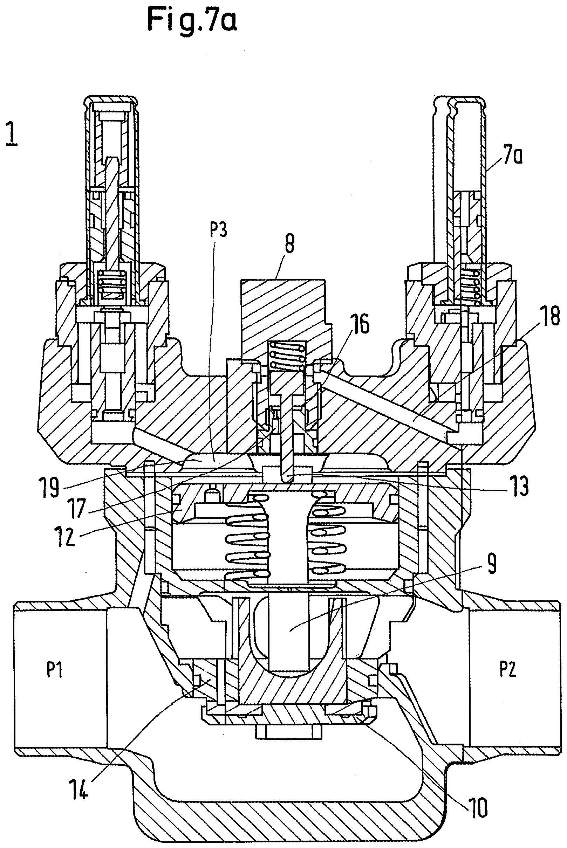

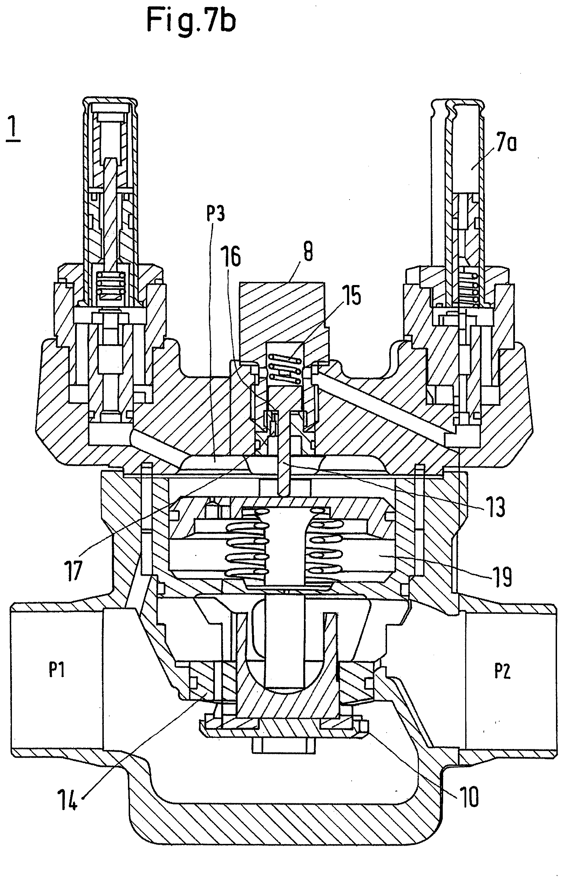

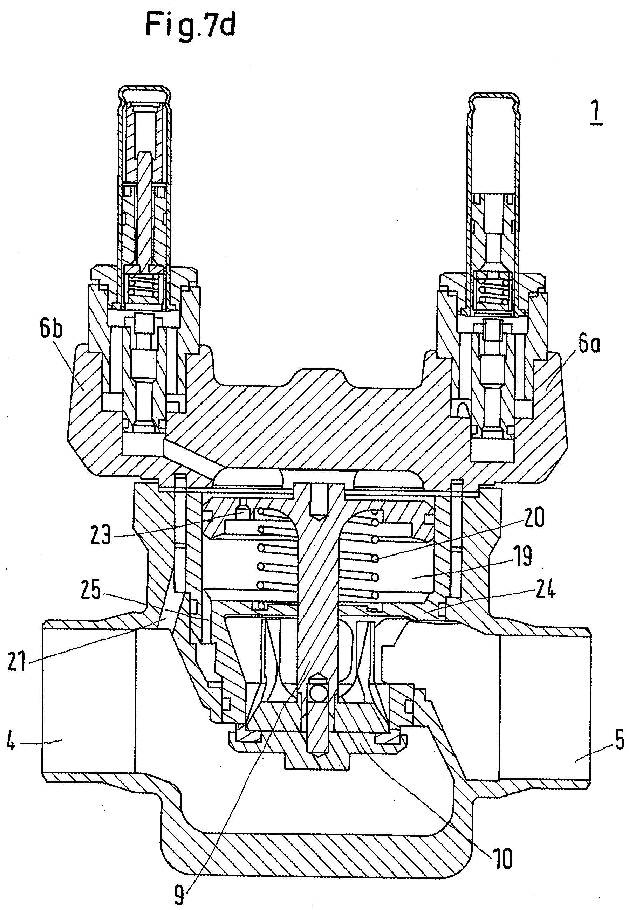

Fig. 7a to 7c now finally illustrate the process as shown in Fig. 6 in more detail.

Fig. 7a shows a situation in which the main valve is completely closed, which means that the throttling section 10 of the main valve element 9 cooperates with the main valve seat 14 in order to maintain a main fluid flow of 0 % of the maximum possible main fluid flow. Initially, there is a high pressure of main fluid in zone P1 next to the inlet 4. The pressure in zones P3 and P2 is low as the main valve and all solenoid valves 7a, 7b are closed in this situation. When solenoid valve 7a is energized the pilot fluid flow to the follower arrangement 8 is established via the fluid conduit 18 connecting zone P1 with the follower arrangement 8. As can be seen, the fluid conduit 18 is part of the top cover 3 of the soft throttling valve 1. The pilot fluid flow, which is in zone P1 between the inlet 4 and the main valve element 9 taken from the main fluid, which shall pass as the main fluid flow through the main valve, flows through the orifice 17 into the pressure chamber 19 above the top plate section 12.

As the pressure increases in section P3, the top plate section 12 is translated downwards, thus also translating downwards the stem section 11 and the throttling section 10 of the main valve. By that the main valve is partially opened as the throttling section 10 moves away from the main valve seat 14. The follower element 13 follows the movement of the top plate section 12 and thus the movement of the main valve element 9 as the follower element 13 is biased towards the top plate section 12 by the biasing element 15. As the follower element seat 16 comprises the orifice 17, when the degree of opening of the main valve reaches the predetermined value the surface of the first section of the follower element 13 comes in contact with the follower element seat 16 and thus blocks the orifice 17 in the follower element seat 16. By that, the pilot fluid flow is interrupted. That means that the pressure in zone P3 does not increase anymore and thus a limited pressure is provided in zone P2 corresponding to the partial opening of the main valve. In this case the main valve is opened at 14 % of the maximum main valve opening. This partial opening may be maintained as long as desired as it is completely self-controlled by the follower element 13 closing the orifice 17 due to the position of the top plate section 12 and the force exerted by the biasing element 15 keeping the follower element 13 in contact with the top plate section 12. The predetermined degree of opening is set via the length of the follower element 13, thus the length of the needle.

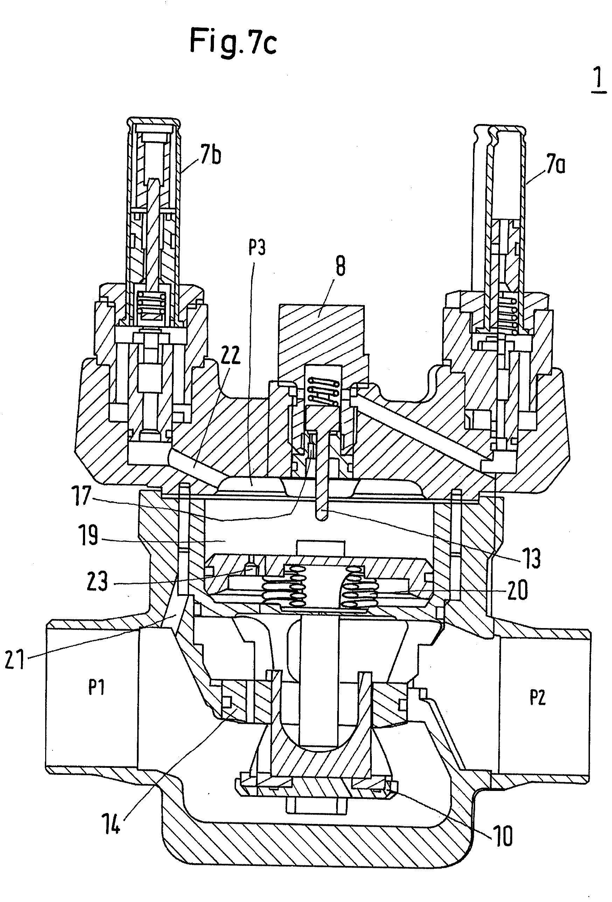

After this first step of opening the second step of opening occurs as is illustrated in Fig. 7c. In this second step of opening the second controlling valve 7b, in this case the second solenoid valve, is energized as well. The other pilot fluid flow is then supplied to the pressure chamber 19 above the top plate section 12 circumventing the follower arrangement 8 via a supply channel 20, the second controlling valve 7b and a feeding channel 21. The additional pressure created in P3 moves the main valve element 9 to a position in which the degree of opening of the main valve resembles 100 % of the maximum fluid flow through the main valve. Thus, a maximum pressure may be provided in zone P2 and by that also at the outlet 5. The follower element 13 at this stage loses contact with the top plate section 12 as it is hindered by the follower element seat 16 and due to the force exerted by the biasing element 15 remains in the position in which the orifice17 is closed. For closing the main valve an inversed approach may be taken so that in a first step the partial opening, thus partial closing, of the main valve is maintained before, by de-energizing the first solenoid valve, the needle can be further translated against the biasing force exerted by the biasing element 15 so that finally the degree of opening of 0 % of the maximum opening of the main valve is established.

Thus, the invention allows throttling the pilot fluid flow for the main valve by means of the follower arrangement 8 in order to set the degree of opening of the main valve during the throttling process of the main valve, the throttling of the pilot fluid flow depending on the degree of opening of the main valve, so as to allow for the soft throttling process of the main valve. As can be seen, soft throttling is possible during the opening process and the closing process of the main valve while in some embodiments soft throttling may be only embodied at the opening process or the closing process. Soft throttling becomes possible as the follower arrangement 8 comprises the orifice 17 and the follower element 13, the follower element 13 reducing the pilot fluid flow through the orifice 17 when the main fluid flow through the main valve reaches a predetermined volume. Specifically, the pilot fluid flow is reduced by blocking the orifice17 by the follower element 13 in order to stop the pilot fluid flow being transferred through the orifice 17.

As illustrated the present invention allows the top cover 3 for the soft throttling valve 1 to provide good control of throttling the main valve in order to prevent pressure shock. As opening and/or closing of the main valve may for example be performed in a two-step manner, sudden pressure increase or decrease in the refrigeration system during defrosting may be prevented. It may be a special advantage of the invention to use the self-controlled throttling of the main valve element 9 in the first step of throttling the main valve.

## Claims

1. A soft throttling valve (1) comprising:
an inlet (4);
an outlet (5); and
a main valve having a main valve element (9) and a main valve seat (14) which cooperates with a throttling section (10) of the main valve element (9) in order to control the main fluid flow through the soft throttling valve (2) between said inlet (4) and said outlet (5), the main valve element (9) having the throttling section (10), a stem section (11), and top plate section (12), the stem section (11) connecting the throlling section (10) with the top plate section (12),
wherein the soft throttling valve (1) is arranged for throttling the main valve in such a way that a pressure shock is reduced and comprises a follower arrangement (8) having a follower element (13) and an orifice (17) and being arranged to throttle a pilot fluid flow taken from the main fluid between the inlet (4) and the main valve element (9), which shall pass as the main fluid flow through the main valve, flows through the orifice 17 into the pressure chamber 19 above the top plate section 12 for setting a degree of opening of the main valve in order to allow a soft throttling of the main valve, the throttling of the pilot fluid flow depending on a degree of opening of the main valve,
**characterized in that** the follower element (13) is arranged to reduce a pilot flow through the orifice (17) depending on the degree of opening of the main valve during the throttling process so that the main valve can be maintained in a partially open position during the throttling process of the main valve and the pilot fluid flow increases a pressure driving the main valve element (9) in opening direction,
wherein due to a reduced pressure increase, a further opening of the main valve may be prevented, so that the main valve maintains a partially opened position, thus the degree of opening corresponds to between more than 0 % of a maximum main fluid flow through the main valve and less than 100 % of the maximum main fluid flow through the main valve, wherein the soft throttling valve (1) comprises a biasing element (15) and the follower element (13) being biased by a force exerted by the biasing element (15) or is attached to the main valve element (9) in order to follow a movement of the main valve element (9), wherein when the main valve element (2) is stopped due to a stop in pressure increase on the top plate section (12) above the top plate section (12) there is constantly a flow in and out of the pressure chamber (19), wherein, in order to allow that pilot fluid may bleed from the pressure chamber (19) to the outlet (5), the top plate section (12) comprises a bleed channel (23) that allows pressure propagation between the pressure chamber (19) below and above the top plate section (12), and a pressure chamber floor (24) comprises one or more bleed passages (25) that provide for pressure propagation between the pressure chamber (19) and the outlet (5).

2. The soft throttling valve according to claim 1, **characterized in that** the fluid flow passes through the orifice (17) in a direction parallel to a movement direction of the follower element (13).

3. The soft throttling valve according to claim 2, **characterized in that** the movement of the follower element (13) is parallel to the movement direction of the main valve element (9).

4. The soft throttling valve according to any of claims 1 to 3, **characterized in that** the follower element (13) is in form of a needle element, the needle element comprising two needle sections, wherein a first needle section has a larger diameter perpendicular to a longitudinal extension of the needle element than a second section of the needle element.

5. The soft throttling valve according to any of claims 1 to 4, **characterized in that** the valve comprises a soft throttling valve body (2) and a top cover (3), the top cover (3) comprising controlling valves (7a, 7b) for activating or deactivating the pilot flow through the valve.

6. The soft throttling valve according to claim 5, **characterized in that** the follower element (13) is in form of a needle and in a biased position of the follower element (13) the needle extends outwardly of the top cover (3), so that it can interact with the main valve element (9) of the soft throttling valve easily.

7. The soft throttling valve according to claim 5 or 6, **characterized in that** the follower arrangement is arranged at the top cover (3) symmetrically between two valve installation seatings (6a, 6b) for the controlling valves (7a, 7b) and on top of the inlet (4) and the outlet (5) of the soft throttling valve body (2).

## Patentansprüche

1. Weichdrosselventil (1), umfassend
einen Einlass (4);
einen Auslass (5); und
ein Hauptventil mit einem Hauptventilelement (9) und einem Hauptventilsitz (14), der mit einem Drosselabschnitt (10) des Hauptventilelements (9) zusammenwirkt, um den Hauptfluidfluss durch das Weichdrosselventil (2) hindurch zwischen dem Einlass (4) und dem Auslass (5) zu steuern, wobei das Hauptventilelement (9) den Drosselabschnitt (10), einen Schaftabschnitt (11) und einen oberen Plattenabschnitt (12) aufweist, wobei der Schaftabschnitt (11) den Drosselabschnitt (10) mit dem oberen Plattenabschnitt (12) verbindet,
wobei das Weichdrosselventil (1) angeordnet ist, um das Hauptventil in einer solchen Weise zu drosseln, dass ein Druckschock reduziert wird, und eine Stößelanordnung (8) mit einem Stößelelement (13) und einer Blende (17) umfasst und angeordnet ist, um einen Pilotfluidfluss, der aus dem Hauptfluid zwischen dem Einlass (4) und dem Hauptventilelement (9) genommen wurde, zu drosseln, welcher als Hauptfluidfluss das Hauptventil passieren soll, durch die Blende 17 in die Druckkammer 19 oberhalb des oberen Plattenabschnitts 12 fließt, um einen Öffnungsgrad des Hauptventils festzulegen, um eine weiche Drosselung des Hauptventils zu ermöglichen, wobei die Drosselung des Pilotfluidflusses von einem Öffnungsgrad des Hauptventils abhängt,
**dadurch gekennzeichnet, dass**
das Stößelelement (13) angeordnet ist, um einen Pilotfluss durch die Blende (17) hindurch in Abhängigkeit von dem Öffnungsgrad des Hauptventils während des Drosselungsprozesses zu reduzieren, so dass das Hauptventil während des Drosselungsprozesses des Hauptventils in einer teilweise offenen Position gehalten werden kann und der Pilotfluidfluss einen Druck erhöht, der das Hauptventilelement (9) in Öffnungsrichtung treibt, wobei infolge eines reduzierten Druckanstiegs eine weitere Öffnung des Hauptventils verhindert werden kann, so dass das Hauptventil eine teilweise geöffnete Position beibehält, damit der Öffnungsgrad zwischen mehr als 0 % eines maximalen Hauptfluidflusses durch das Hauptventil und weniger als 100 % des maximalen Hauptfluidflusses durch das Hauptventil hindurch liegt, wobei das Weichdrosselventil (1) ein Vorspannelement (15) umfasst, und das Stößelelement (13) durch eine Kraft vorgespannt wird, die durch das Vorspannelement (15) ausgeübt wird, oder an dem Hauptventilelement (9) befestigt ist, um einer Bewegung des Hauptventilelements (9) zu folgen,
wobei, wenn das Hauptventilelement (2) infolge eines Stopps des Druckanstiegs auf dem oberen Plattenabschnitt (12) gestoppt wird, oberhalb des oberen Plattenabschnitts (12) ein konstanter Fluss in die Druckkammer (19) und aus dieser heraus stattfindet, wobei der obere Plattenabschnitt (12), um zu ermöglichen, dass Pilotfluid aus der Druckkammer (19) zu dem Auslass (5) abgelassen werden kann, einen Ablasskanal (23) umfasst, der Druckausbreitung zwischen der Druckkammer (19) unterhalb und oberhalb des obere Plattenabschnitts (12) ermöglicht, und wobei ein Druckkammerboden (24) eine oder mehrere Ablasspassagen (25) umfasst, die Druckausbreitung zwischen der Druckkammer (19) und dem Auslass (5) bereitstellen.

2. Weichdrosselventil nach Anspruch 1, **dadurch gekennzeichnet, dass** der Fluidfluss die Blende (17) in eine Richtung parallel zu einer Bewegungsrichtung des Stößelelements (13) passiert.

3. Weichdrosselventil nach Anspruch 2, **dadurch gekennzeichnet, dass** die Bewegung des Stößelelements (13) parallel zu der Bewegungsrichtung des Hauptventilelements (9) ist.

4. Weichdrosselventil nach einem der Ansprüche 1 bis 3, **dadurch gekennzeichnet, dass** das Stößelelement (13) in Form eines Nadelelements vorliegt, wobei das Nadelelement zwei Nadelabschnitte umfasst, wobei ein erster Nadelabschnitt einen größeren Durchmesser senkrecht zu einer Längsausdehnung des Nadelelements als ein zweiter Abschnitt des Nadelelements hat.

5. Weichdrosselventil nach einem der Ansprüche 1 bis 4, **dadurch gekennzeichnet, dass** das Ventil einen Weichdrosselventilkörper (2) und eine obere Abdeckung (3) umfasst, wobei die obere Abdeckung (3) Steuerventile (7a, 7b) zum Aktivieren oder Deaktivieren des Pilotflusses durch das Ventil hindurch umfasst.

6. Weichdrosselventil nach Anspruch 5, **dadurch gekennzeichnet, dass** das Stößelelement (13) in Form einer Nadel vorliegt, und die Nadel sich in einer vorgespannten Position des Stößelelements (13) von der oberen Abdeckung (3) auswärts erstreckt, so dass sie leicht mit dem Hauptventilelement (9) des Weichdrosselelements interagieren kann.

7. Weichdrosselventil nach Anspruch 5 oder 6, **dadurch gekennzeichnet, dass** die Stößelanordnung an der oberen Abdeckung (3) symmetrisch zwischen zwei Ventileinbausitzen (6a, 6b) für die Steuerventile (7a, 7b) und oben auf dem Einlass (4) und dem Auslass (5) des Weichdrosselventilkörpers (2) angeordnet ist.

## Revendications

1. Soupape d'étranglement souple (1) comprenant :
une admission (4) ;
une évacuation (5) ; et
une soupape principale comportant un élément (9) de soupape principale et un siège (14) de soupape principale qui coopère avec une section d'étranglement (10) de l'élément (9) de soupape principale dans le but de réguler l'écoulement de fluide principal à travers la soupape d'étranglement souple (2) entre ladite admission (4) et ladite évacuation (5), l'élément (9) de soupape principale comportant la section d'étranglement (10), une section tige (11) et une section plaque supérieure (12), la section tige (11) reliant la section d'étranglement (10) à la section plaque supérieure (12),
la soupape d'étranglement souple (1) étant conçue pour étrangler la soupape principale de telle sorte qu'un choc de pression soit réduit et comprend un agencement suiveur (8) comportant un élément suiveur (13) et un orifice (17) et étant conçue pour étrangler un écoulement de fluide pilote pris depuis le fluide principal entre l'admission (4) et l'élément (9) de soupape principale, qui doit passer en tant qu'écoulement de fluide principal à travers la soupape principale, s'écoule à travers l'orifice (17) vers la chambre de pression (19) au-dessus de la section plaque supérieure (12) pour définir un degré d'ouverture de la soupape principale dans le but de permettre un étranglement souple de la soupape principale, l'étranglement de l'écoulement de fluide pilote dépendant d'un degré d'ouverture de la soupape principale, **caractérisée en ce que** l'élément suiveur (13) est conçu pour réduire un écoulement pilote à travers l'orifice (17) en fonction du degré d'ouverture de la soupape principale pendant le processus d'étranglement de sorte que la soupape principale puisse être maintenue dans une position partiellement ouverte pendant le processus d'étranglement de la soupape principale et l'écoulement de fluide pilote augmente une pression entraînant l'élément (9) de soupape principale dans une direction d'ouverture, dans laquelle en raison d'une augmentation de pression réduite, une ouverture supplémentaire de la soupape principale peut être empêchée, de sorte que la soupape principale conserve une position partiellement ouverte, ainsi le degré d'ouverture correspond à entre plus de 0 % d'un écoulement de fluide principal maximum à travers la soupape principale et moins de 100 % de l'écoulement de fluide principal maximum à travers la soupape principale, dans laquelle la soupape d'étranglement souple (1) comprend un élément de sollicitation (15) et l'élément suiveur (13) étant sollicité par une force exercée par l'élément de sollicitation (15) ou est fixé à l'élément (9) de soupape principale dans le but de suivre un déplacement de l'élément (9) de soupape principale, dans laquelle, lorsque l'élément (2) de soupape principale est arrêté en raison d'un arrêt de l'augmentation de pression sur la section plaque supérieure (12) au-dessus de la section plaque supérieure (12), il existe en permanence un écoulement dans et hors de la chambre de pression (19), dans laquelle, dans le but de permettre qu'un fluide pilote puisse se purger depuis la chambre de pression (19) vers l'évacuation (5), la section plaque supérieure (12) comprend un canal (23) de purge qui permet une propagation de la pression entre la chambre de pression (19) au-dessous et au-dessus de la section plaque supérieure (12), et un plancher (24) de chambre de pression comprend un ou plusieurs passages de purge (25) qui fournissent une propagation de pression entre la chambre de pression (19) et l'évacuation (5).

2. Soupape d'étranglement souple selon la revendication 1, **caractérisée en ce que** l'écoulement de fluide passe à travers l'orifice (17) dans une direction parallèle à une direction de déplacement de l'élément suiveur (13).

3. Soupape d'étranglement souple selon la revendication 2, **caractérisée en ce que** le déplacement de l'élément suiveur (13) est parallèle à la direction de déplacement de l'élément (9) de soupape principale.

4. Soupape d'étranglement souple selon l'une quelconque des revendications 1 à 3,
**caractérisée en ce que** l'élément suiveur (13) a la forme d'un élément aiguille, l'élément aiguille comprenant deux sections d'aiguille,
dans laquelle une première section aiguille a un diamètre perpendiculaire à une extension longitudinale de l'élément aiguille plus grand que celui d'une seconde section de l'élément aiguille.

5. Soupape d'étranglement souple selon l'une quelconque des revendications 1 à 4,
**caractérisée en ce que** la soupape comprend un corps (2) de soupape d'étranglement souple et un couvercle supérieur (3), le couvercle supérieur (3) comprenant des soupapes de commande (7a, 7b) pour activer ou désactiver l'écoulement pilote à travers la soupape.

6. Soupape d'étranglement souple selon la revendication 5, **caractérisée en ce que** l'élément suiveur (13) a la forme d'une aiguille et, dans une position sollicitée de l'élément suiveur (13), l'aiguille s'étend vers l'extérieur du couvercle supérieur (3), de sorte qu'elle puisse entrer facilement en interaction avec l'élément (9) de soupape principale de la soupape d'étranglement souple.

7. Soupape d'étranglement souple selon la revendication 5 ou 6, **caractérisée en ce que** l'agencement suiveur est disposé au niveau du couvercle supérieur (3) symétriquement entre deux sièges d'installation de soupape (6a, 6b) pour les soupapes de commande (7a, 7b) et au-dessus de l'admission (4) et de la sortie (5) du corps (2) de soupape d'étranglement souple.
